# DEMANDE DE BREVET EUROPEEN

(11) **EP 0 701 868 A1**
(43) Date de publication de la demande: **20.03.1996**
(21) Numéro de dépôt: 95410088.9
(22) Date de dépôt: 10.08.1995
(51) Int. Cl.: B05B 15/12, B05B 15/04

(54) **Cabine de revêtement d'objets par projection de matériau pulvérulent et procédés de nettoyage d'une telle cabine**

(30) Priorité: 16.09.1994 FR 9411341
(71) Demandeur: SAMES S.A., F-38243 Meylan Cédex (FR)
(72) Inventeur: Lacchia, Adrien, F-38950 Saint Martin le Vinoux (FR)
(74) Mandataire: Myon, Gérard Jean-Pierre

(57) **Abrégé**

Cabine (11) de revêtement d'objets par projection de matériau pulvérulent, du type dans laquelle les objets sont assujettis à traverser un espace de projection défini par un plafond (15), des parois (17) et un plancher (24), ladite cabine comportant des moyens d'évacuation (30) du matériau pulvérulent déposé dans ladite cabine vers des trémies (31) de récupération, caractérisée en ce qu'elle comprend au moins une barre de raclage (40,50) susceptible d'être montée contre ledit plafond ou au moins l'une desdites parois. Chaque barre (40,50) est couplé magnétiquement avec son système d'entraînement (43,53). Le procédé consiste à nettoyer par raclage le plafond (15) et les parois (17) avant de nettoyer le plancher (24) en installant au moins une barre de raclage (40,50) amovible.

## Description

L'invention concerne une cabine de revêtement d'objets par projection de matériau pulvérulent, notamment pour appliquer par voie électrostatique une couche de peinture thermofusible en poudre sur de tels objets, avant de transformer cette couche de poudre en un revêtement résistant par chauffage de ces objets. Elle concerne plus particulièrement un agencement permettant de récupérer une partie de la poudre qui ne se dépose pas sur les objets et finit par recouvrir le plancher, le plafond et les parois de la cabine. L'invention concerne aussi deux procédés de nettoyage rapide d'une telle cabine.

Dans une cabine de revêtement par poudrage du type indiqué ci-dessus, la poudre qui ne se dépose pas sur les objets et qui n'est pas entraînée par les systèmes d'aspiration et de recyclage prévus sur les parois latérales de la cabine s'accumule sur le plafond, les parois et le plancher de la cabine. La poudre accumulée sur le plancher peut être évacuée en direction de moyens de recyclage par un système connu par exemple de FR-A-2675061 au nom de la demanderesse. Certaines installations sont prévues pour la projection de plusieurs matériaux de revêtement de couleur ou de propriétés mécaniques et chimiques différentes. Dans ce cas, il est impératif de nettoyer l'ensemble de la cabine lors des changements de produit pour éviter le mélange des différents produits dans les systèmes de récupération de poudre. Il a parfois été prévu de nettoyer une cabine avec un chariot suspendu à des rails et portant des brosses ou des chiffons qui frottent sur les parois, le plafond et le plancher. Un tel système est connu de EP-A-200 681. Il nécessite d'interrompre la projection pendant un intervalle de temps important car il faut déplacer un chariot complet. Il impose aussi la construction d'un convoyeur spécifique supplémentaire de transport et de garage du chariot, ce qui, en plus du coût du chariot lui-même, majore sensiblement le prix de l'installation. De plus, le chariot se déplace dans le sens de convoyage des objets à revêtir et il risque de heurter le bord des fenêtres ménagées dans les parois de la cabine, ce qui endommage les éléments de nettoyage, brosses ou chiffon, et déclenche le système de sécurité à cause du blocage du chariot.

Enfin, dans les systèmes à chariot de nettoyage simultané du plafond, des parois et du plancher d'une cabine, la poudre décrochée du plafond ou des parois forme un nuage qui ne se dépose pas immédiatement sur le plancher. Une partie de la poudre tombe sur le plancher après le passage du chariot et ceci diminue sensiblement l'efficacité du nettoyage. En pratique, dans une installation apte à projeter plusieurs matériaux qui ne doivent pas être mélangés, il est nécessaire de prévoir plusieurs allers et retours du chariot, ce qui rallonge la durée de l'interruption de la projection.

L'invention résout l'ensemble de ces problèmes.

Elle concerne une cabine de revêtement d'objets par projection de matériau pulvérulent, du type dans laquelle les objets sont assujettis à traverser un espace de projection défini par un plafond, des parois et un plancher, ladite cabine comportant des moyens d'évacuation du matériau pulvérulent déposé dans la cabine vers des trémies de récupération, caractérisée en ce qu'elle comprend au moins une barre de raclage susceptible d'être montée contre le plafond ou l'une des parois.

L'invention permet de mettre en oeuvre le système de raclage d'une manière aisée et aux moments choisis par l'opérateur, et dans certains cas, y compris pendant les phases de projection. En particulier, chaque barre de raclage est déplacée en translation par un équipage mobile auquel elle est reliée par des moyens de couplage magnétique constitués par des aimants. Ceci permet de positionner rapidement la ou les barres de raclage dans la cabine, ce qui implique un gain de temps substantiel lors du nettoyage, c'est-à-dire par exemple lors des changements de produit de revêtement (changement de couleur). Dans certaines configurations, en l'absence de changement de produit de revêtement, il est même possible de faire fonctionner la ou les barres de raclage lors des phases de projection car il n'y a pas d'interférence avec le convoyeur qui transporte les pièces à revêtir. Ceci permet aussi un gain de temps et l'on peut envisager une mise en route automatique du système de raclage à intervalles réguliers. Enfin, lorsqu'il est nécessaire d'extraire une barre de raclage de la cabine, à la fin d'une phase de nettoyage ou pour une opération de maintenance, il suffit de vaincre la force de rappel des aimants.

L'invention concerne aussi un procédé de nettoyage d'une cabine de revêtement d'objets par projection de matériau pulvérulent, du type dans laquelle les objets sont assujettis à traverser un espace de projection défini par un plafond, des parois et un plancher caractérisé en ce que ledit plafond ou lesdites parois sont nettoyés par raclage, en ce que ledit plancher est nettoyé par raclage et en ce que le nettoyage dudit plafond ou celui desdites parois a lieu avant celui dudit plancher.

Grâce au procédé de l'invention, on peut faire tomber la poudre du plancher tout d'abord, des parois ensuite, vers le plancher de la cabine qui est nettoyé par une barre de raclage qui évacue à la fois la poudre qui s'est déposée sur le plafond, les parois et le plancher.

Le procédé peut aussi consister à installer de façon amovible dans la cabine des barres de raclage déplaçables sur la surface interne du plafond et/ou des parois. Il peut enfin consister à utiliser une unique barre de raclage déplaçable alternativement sur la surface interne du plafond et/ou des parois et/ou du plancher.

Ces trois procédés permettent de gagner du temps lors des phases de nettoyage et ne nécessitent de la part de l'opérateur que des tâches simples et peu pénibles car les objets à manipuler sont légers et d'un encombrement relativement faible. L'investissement nécessaire à leur mise en oeuvre est peu élevé, ce qui les rend économiquement rentables.

L'invention sera mieux comprise et d'autres avantages de celle-ci apparaîtront plus clairement à la lumière de la description qui va suivre de quatre modes de réalisation d'une cabine de revêtement d'objets par projection de matériau pulvérulent conforme à son principe donnée uniquement à titre d'exemple et faite en référence aux dessins annexés dans lesquels
- la figure 1 est une vue schématique, en perspective avec arrachement partiel, d'une cabine selon l'invention,
- la figure 2 est une section selon II-II sur la figure 1,
- la figure 3 est une vue en coupe selon III-III sur la figure 1 pour un second mode de réalisation,
- la figure 4 est une vue similaire à la figure 3 pour un troisième mode de réalisation,
- la figure 5 est une vue en coupe selon IV-IV de la figure 1 pour un quatrième mode de réalisation et
- la figure 6 est une vue du dispositif de la figure 5 dans une autre position de travail.

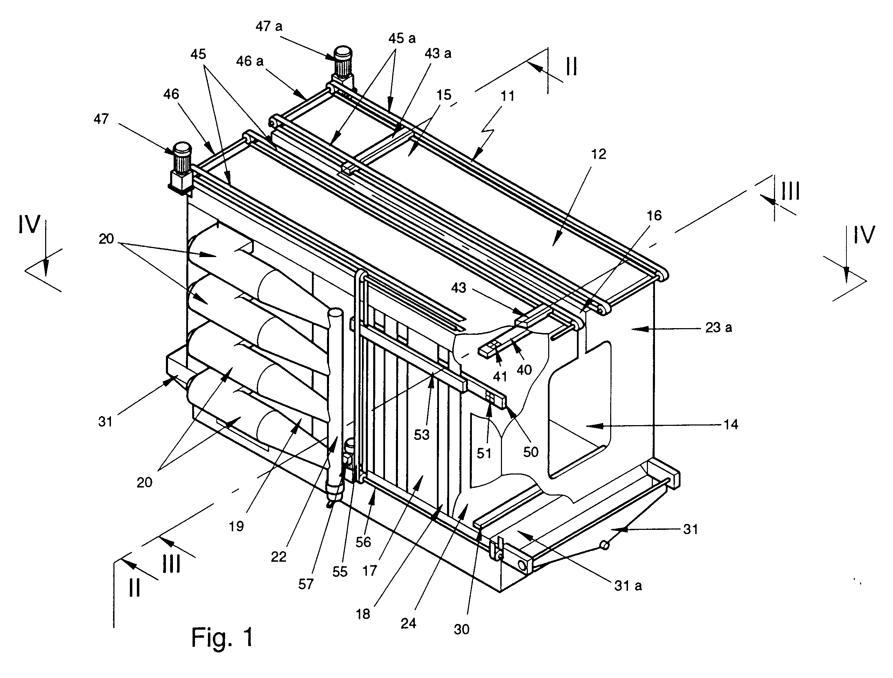

En se reportant plus particulièrement à la figure 1, on a représenté une cabine 11 de revêtement d'objets par projection de poudre constituée par un caisson 12, de forme générale parallépipèdique rectangle, muni d'une ouverture d'entrée 13 et d'une ouverture de sortie 14 des objets respectivement pratiqués dans des parois 23 et 23a. Une ouverture longitudinale étroite 16 est ménagée dans le plafond 15 du caisson 12 et des deux parois 23 et 23a pour le passage de supports d'objets, ou balancelles, déplacés par un convoyeur aérien, ces éléments classiques n'étant pas représentés. Chaque paroi latérale 17 et 17a du caisson 12 est pourvue de fentes 18, ici verticales, pour le passage des supports des projecteurs de produit de revêtement non représentés. En face des fentes de chaque paroi 17 et 17a, le long de l'autre paroi, est installée une hotte d'aspiration 19 reliée par des extracteurs 20, de type cyclone, à un collecteur 22 de recyclage. Une partie de la poudre non déposée sur les objets traverse ainsi la cabine transversalement avant d'être aspirée par une telle hotte 19 puis recyclée. Le caisson 12 est muni d'un plancher plan 24, sensiblement rectangulaire. En utilisation, de la poudre finit par se déposer sur le plafond 15, les parois 17 et le plancher 24. Une barre de raclage 30 est agencée pour se déplacer alternativement en translation entre les ouvertures de deux trémies de récupération de poudre 31 situées aux deux extrémités du caisson 12 et s'ouvrant transversalement par une fente 31a à l'intérieur de celui-ci au niveau du plancher 24. Des brosses, ou tout autre moyen de raclage équivalent tels que des raclettes en élastomère ou des patins de feutre, sont montés sur la barre 30.

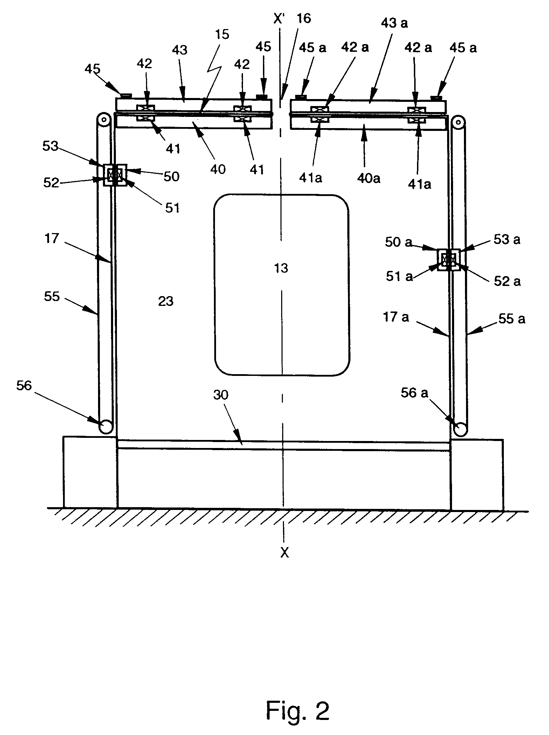

Conformément à l'invention, une barre de raclage 40 peut être montée sur la partie gauche de la face interne du plafond 15, c'est-à-dire la partie du plafond située à gauche de l'axe XX' du convoyeur sur la figure 2, grâce aux forces magnétiques d'aimants 41, visibles à la figure 2, qui sont enchâssés dans cette barre et disposés en regard d'aimants 42, eux aussi visibles à la figure 2, portés par un équipage mobile 43. Le plafond 15 est réalisé dans un matériau amagnétique, tel qu'un acier inoxydable du type 316L ou un matériau plastique. L'équipage mobile est déplacé en translation sur la face extérieure du plafond par des courroies crantées 45 entraînées par un arbre 46 piloté par un moteur électrique pas à pas 47. Au choix de l'opérateur, la barre de raclage 40 peut être montée ou non pendant les phases de projection puisque son entraînement n'interfère en rien avec le système de convoyage des objets à revêtir ou avec le mouvement des projecteurs de produit de revêtement. Une seconde barre de raclage 40a peut être montée sur la partie droite du plafond 15. Un équipage mobile 43a et son système d'entraînement, dont les éléments sont identiques à ceux de l'équipage 43 et portent les mêmes références auxquelles est ajouté un "a", sont prévus sur la face externe du plafond 15 située à droite de l'axe XX'.

Avantageusement, si l'on ne se sert pas continuellement des barres de raclage, on peut utiliser une seule barre 40 qui est montée alternativement à gauche et à droite de l'axe XX' du convoyeur. On économise ainsi une partie de l'équipement et on gagne en volume de stockage.

Une barre de raclage 50 est entraînée le long de la face interne de la paroi 17 par un équipage mobile 53 auquel elle est reliée par la force d'aimants 51 et 52 à travers la paroi réalisée aussi en matériau amagnétique. L'équipage mobile 53 est déplacé en translation sur la face extérieure de la paroi 17 par des courroies crantées 55 entraînées par un arbre 56 piloté par un moteur électrique pas à pas 57. La barre de raclage 50 est déplacée verticalement le long de la surface interne de la paroi 17, ce qui lui permet de porter en permanence sur les deux bords longitudinaux des fentes 18. Elle ne risque pas de se coincer sur les bords des fentes 18, ce qui serait le cas si elle était déplacée parallèlement au trajet des objets dans la cabine car la traction des aimants ferait butter le bord d'attaque de la barre sur le bord de la fente 18. Comme précédemment, on peut choisir de n'utiliser qu'une barre 50 pour les deux parois 17 et 17a de la cabine. Un équipage mobile 53a et son système d'entraînement, dont les éléments sont identiques à ceux de l'équipage 53 et portent les mêmes références auxquelles est ajouté un "a", sont prévus sur la face externe de la paroi 17a. Une seconde barre de raclage 50a peut aussi être prévue.

Selon une variante avantageuse non représentée, on peut prévoir que les barres de raclage 40 et 50 ne sont pas extraites de la cabine à la fin des phases de nettoyage mais qu'elles demeurent, par exemple en fin de course, dans une position compatible avec les mouvements des projecteurs ou du convoyeur. Dans ce cas, il est possible de prévoir un logement spécifique pour ces barres, ce logement pouvant être fermé par un capot de protection empêchant en particulier la poudre de s'infiltrer dans le logement.

L'équipage mobile 53 représenté à la figure 1 a une longueur correspondant sensiblement à la moitié de la longueur de la cabine à cause de l'encombrement des extracteurs 20. Si nécessaire, il permet cependant d'entraîner une barre de raclage 50 dont la longueur est sensiblement égale à celle de la cabine en prévoyant un second équipage mobile entraîné par une courroie à proximité de la paroi 23. Le déplacement des équipages mobiles est synchronisé par des arbres situés au dessus et en dessous des extracteurs 20.

Le fonctionnement est le suivant: lorsqu'il est nécessaire de nettoyer le plafond et les parois de la cabine, la barre 40 ou les barres 40 et 40a sont présentées par l'opérateur de façon à ce que les aimants 41 et 41a soient en regard des aimants 42 et 42a portés par les équipages mobiles 43 et 43a. Les forces de couplage magnétique vainquent la gravité et les barres de raclage peuvent être déplacées par leurs équipages mobiles respectifs. Les brosses des barres de raclage font tomber la poudre sur les parois et le plancher de la cabine. Ensuite, les barres de raclage peuvent être démontées par simple traction vers le bas pour vaincre la force magnétique. Lorsqu'il est nécessaire de nettoyer les parois 17 et 17a, on procède d'une manière analogue. On notera que le dispositif de l'invention permet de nettoyer le plafond 15 avant les parois 17 et 17a, ce qui laisse à la poudre décrochée du plafond le temps de se déposer sur les parois avant qu'elle ne soit raclée pour la décrocher des parois et la faire tomber sur le plancher 24. Après le nettoyage des parois la barre de raclage 30 posée sur le plancher évacue la poudre ainsi récupérée vers les trémies 31. Le fonctionnement de la barre 30 peut être maintenu pendant toute la phase de nettoyage, ce qui permet d'évacuer la poudre en permanence et évite la formation d'amas trop importants sur le plancher.

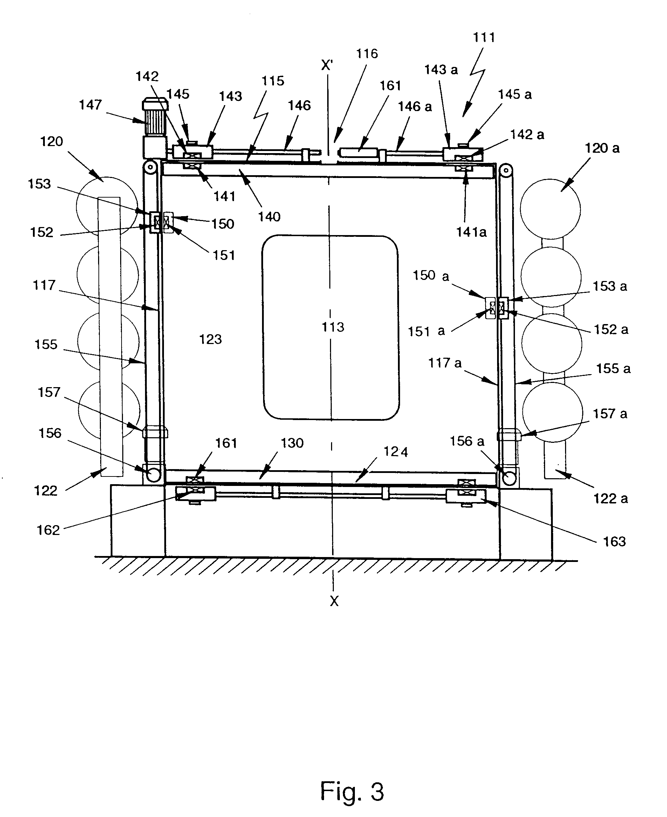

La cabine de la figure 3 diffère de celle des figures 1 et 2 en ce qu'une barre raclage unique 140 est prévue. Les éléments similaires à ceux des figures 1 et 2 portent des références identiques majorées de 100. Deux équipages mobiles 143 et 143a sont situés sur la face externe du plafond 115 de part et d'autre de l'ouverture longitudinale 116, ce qui permet le passage des balancelles. Ils sont déplacés par des courroies 145 entraînées par un arbre 146 qui est interrompu sur une longueur équivalente à la largeur de l'ouverture 116 afin de laisser un passage libre pour les balancelles de transport des objets à revêtir. L'arbre 146 est mis en mouvement par un moteur 147, par exemple électrique pas à pas. Des paliers supportent l'arbre 146 à proximité de l'ouverture 116. Lorsqu'il est nécessaire de procéder au nettoyage du plafond, le convoyage des objets est interrompu et un manchon 161 est déplacé au dessus de l'ouverture 116 pour relier les deux moitiés de l'axe 146 qui peuvent ainsi entraîner de façon synchronisée les équipages mobiles 143 et 143a. Selon une variante de l'invention non représentée, l'entraînement de la barre de raclage 140 pourrait avoir lieu par tout système équivalent tel que, par exemple, un équipage mobile unique de longueur égale à la la largeur de la cabine et pivotant autour d'un axe verticale proche d'une de ses extrémités pour reposer sur une des moitiés du toit 115 lorsque les objets à revêtir doivent circuler dans la cabine 111.

La longueur de la barre de raclage 140 est sensiblement égale à la largeur de la cabine. L'entraînement en translation de la barre 130 située sur le plancher est effectuée par un équipage mobile 163 auquel elle est magnétiquement couplée par des aimants 161 et 162. De la sorte, il est possible de prévoir que la barre de raclage 140 pourra participer au nettoyage du plafond 115 et du plancher 124 en prenant les places de la barre de raclage 130. Il suffit à l'opérateur de la positionner en regard de l'équipage correspondant. Il est aussi possible de prévoir que cette même barre de raclage 140 soit couplée aux équipages mobiles 153 et 153a en prenant la place des barres 150 et 150a. Ainsi, une barre de raclage unique peut servir au nettoyage de toute la cabine. On pourra avantageusement prévoir un unique moteur qui entraînera, par exemple au moyen de renvois d'angle et d'embrayages, celui des équipages mobiles auquel est couplée la barre de raclage 140. Comme précédemment, le raclage du plancher 124 a lieu après celui du plafond 115 et des parois 117.

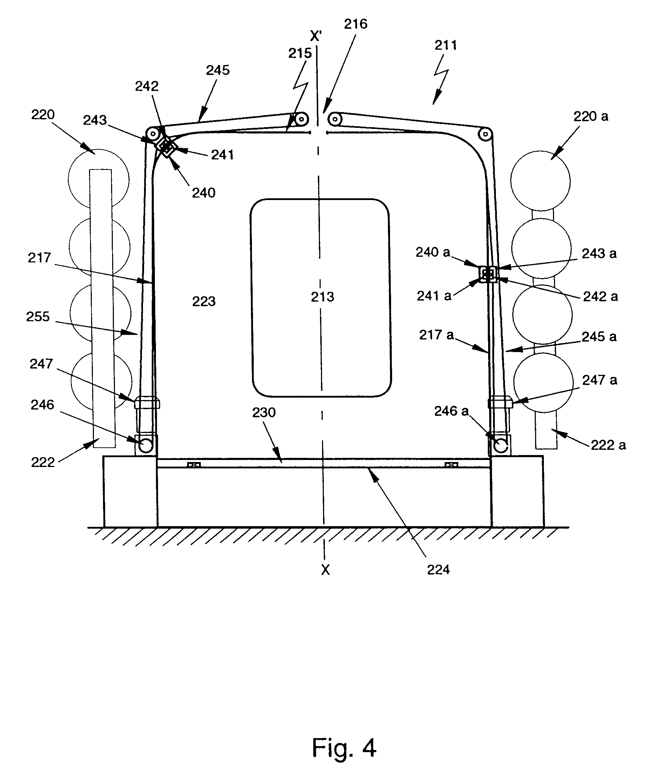

La cabine de la figure 4 diffère de celle des figures 1 et 2 en ce qu'une barre raclage unique est prévue pour le nettoyage du plafond et des parois de la cabine. Les éléments similaires à ceux des figures 1 et 2 portent des références identiques majorées de 200. L'équipage mobile est parallèle au trajet des objets à revêtir dans la cabine 211 dont le raccordement entre le plafond 215 et les parois 217 et 217a présente un rayon de courbure de l'ordre de 15 cm. Les courroies 245 d'entraînement de l'équipage 243 sont disposées de façon à permettre son déplacement à la fois sur le plafond 215 et sur les parois 217, respectivement 217a. La surface externe de la zone de raccordement entre le plafond 215 et les parois 217 et 217a est traitée pour favoriser le glissement des courroies 245 et 245a. La barre de raclage 240, qui est magnétiquement couplée à l'équipage mobile 243, peut donc nettoyer les deux surfaces internes correspondantes du toit 215 et de la paroi 217. Une barre de raclage 240 peut être placée alternativement des deux côtés de l'axe XX' ou deux barres de raclage 240 et 240a fonctionnant concomitamment peuvent être prévues. Comme la barre de raclage 240 peut faire plusieurs allers et retours entre la paroi et le plafond, il n'est pas nécessaire de prévoir de nettoyer le plafond avant la paroi. En revanche, la barre 230 située sur le plancher 224 sera activée après le nettoyage du plafond 215 et des parois 217 et 217a pour évacuer la poudre décrochée par les barres 240 et 240a. Les barres de raclage 240 et 240a peuvent fonctionner pendant les phases de projection de produit de revêtement, au moins sur la partie de leur trajectoire située au dessus du point le plus haut du trajet des projecteurs.

Un dispositif équivalent à celui de la figure 4 peut aussi être utilisé avec la cabine de la figure 3. En effet, si le rayon de courbure de la zone de raccordement entre le toit 115 et les parois 123 et 123a dans lesquelles sont ménagées les ouvertures 113 et 114 est assez grand, il est possible de faire transiter la barre de raclage du plafond 115 vers chacune des parois 123 et 123a. L'équipage mobile 143 doit être prévu en conséquence. Il est ainsi possible de nettoyer, dans un même mouvement de translation, la paroi 123, le toit 115 et la paroi 123a, plusieurs allers et retours étant possibles.

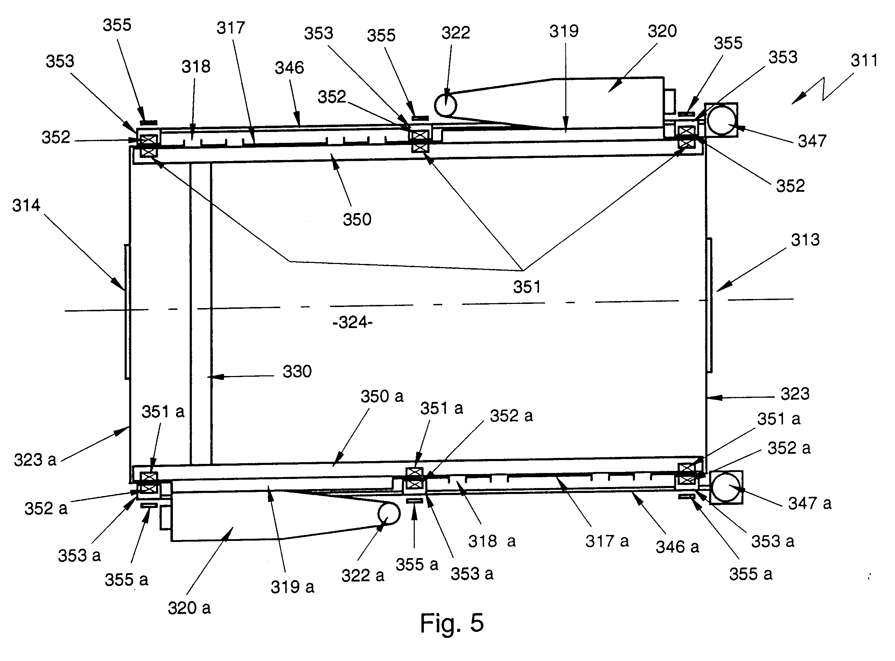

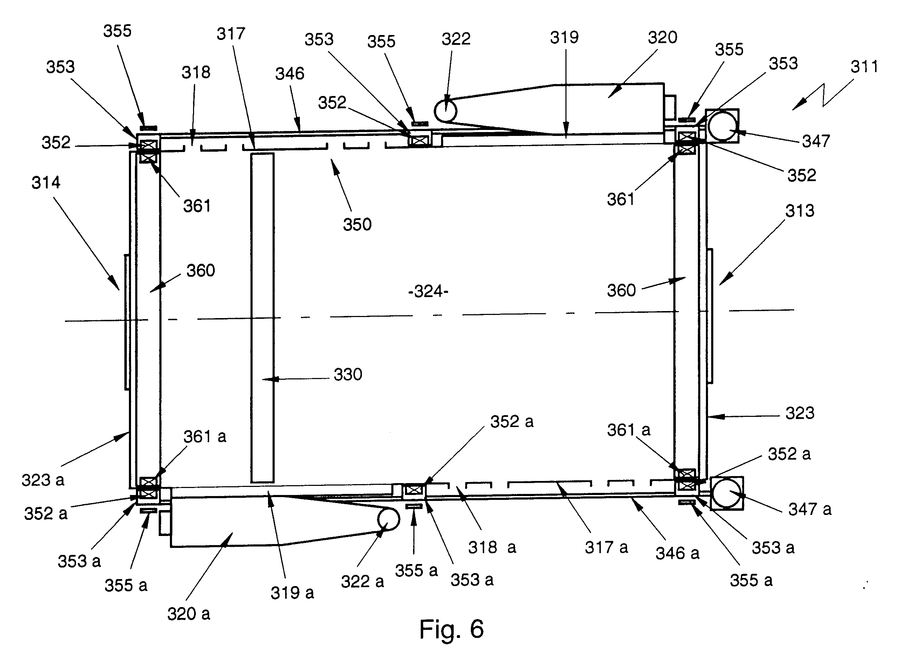

La cabine des figures 5 et 6 diffère de celle des figures précédentes en ce que les équipages mobiles peuvent entraîner plusieurs barres de raclage destinées à nettoyer plusieurs parois. Les éléments similaires à ceux des figures 1 et 2 portent des références identiques majorées de 300. L'équipage mobile 353 est divisé en trois parties entraînées chacune par une courroie. L'encombrement des extracteurs 320 n'est pas gênant pour entraîner une barre de raclage dont la longueur est sensiblement égale à celle de la cabine. Une barre de raclage 330 est aussi posée sur le plancher 324. Les barres de raclage 350 et 350a permettent de nettoyer les parois 317 et 317a. Lorsqu'il est nécessaire de nettoyer les parois 323 et 323a, les barres de raclage 350 et 350a sont extraites et les barres de raclage 360 et 360a sont mises en place conformément à ce qui est visible à la figure 6. Les aimants 361 et 361a qui assurent la liaison entre ces barres et les équipages mobiles 353 et 353a sont logés aux extrémités des barres 360 et 360a, ce qui permet d'utiliser les équipages mobiles des barres 350 et 350a. Ainsi, il n'est pas nécessaire de prévoir des équipages mobiles sur la face externe des parois 323 et 323a: les équipages mobiles 353 et 353a peuvent ainsi entraîner au choix les barres de raclage 350 et 350a ou 360 et 360a.

Tout système d'entraînement permettant la translation des équipages mobiles, tel qu'un ou plusieurs vérins, des chaînes ou autres, pourrait être utilisé avec l'invention, et en particulier les systèmes envisagés dans FR-A-2675061. Les modes de réalisation illustrés présentent des fentes verticales dans les parois de la cabine et des barres de raclage avec un mouvement vertical afin de reposer à la fois sur les deux bords de ces fentes. Dans le cas où ces fentes seraient horizontales, par exemple pour permettre un mouvement de suivi latéral des objets se déplaçant dans la cabine, la barre de raclage correspondante pourrait être déplacée horizontalement. La géométrie et la dimension des barres de raclage pourront être adaptées en fonction de l'emplacement et de l'encombrement des systèmes de ventilation qui n'incluent pas nécessairement des séparateurs de type cyclone. Toutes ces modifications sont à la portée de l'homme du métier et ne sortent pas du cadre de l'invention.

On a dit précédemment que le nettoyage du plafond et des parois de la cabine a lieu avant celui du plancher ou, inversement que le nettoyage du plancher a lieu après celui du plafond et/ou des parois. Ceci signifie en fait que le nettoyage du plancher est interrompu après la fin du nettoyage du plafond ou des parois. Il peut avoir commencé avant, pendant ou après le nettoyage du plafond et des parois.

## Revendications

**1°-** Cabine (11) de revêtement d'objets par projection de matériau pulvérulent, du type dans laquelle les objets sont assujettis à traverser un espace de projection défini par un plafond (15), des parois (17,17a) et un plancher (24), ladite cabine comprenant des moyens d'évacuation (30) du matériau pulvérulent déposé dans ladite cabine vers des trémies (31) de récupération, ladite cabine comprenant au moins une barre de raclage (40,40a) susceptible d'être montée de manière amovible contre ledit plafond ou au moins l'une desdites parois, caractérisée en ce que au moins un équipage mobile (43,43a) est installé sur la face externe dudit plafond (15) ou desdites parois (17,17a) et en ce que ledit équipage et ladite barre de raclage sont munis de moyens de couplage magnétique coopérants (41,42,51,52).

**2°-** Cabine selon la revendication 1 caractérisée en ce que ledit équipage mobile (43,43a) est déplacé sur ladite face externe par un jeu de courroies (45,45a).

**3°-** Cabine selon l'une des revendications 1 ou 2, caractérisée en ce que ledit équipage mobile (43,43a) et ladite barre (40,40a) de raclage sont munis d'aimants (41,42,51,52) disposés de façon que chaque aimant dudit équipage mobile soit en regard d'un aimant (de ladite barre lorsque ladite barre est en position de fonctionnement sur ledit plafond (15,115,215) ou l'une desdites parois

**4°-** Cabine selon la revendication 1 caractérisée en ce que ledit équipage mobile (43,43a,143,143a), monté sur la face externe dudit plafond (15,115), est agencé pour déplacer ladite barre (40,40a,140) alternativement parallèlement à la direction de déplacement desdits objets dans ladite cabine.

**5°-** Cabine selon la revendication 1, dont les parois comprennent des fentes (18,318,318a) dans les parois (17,17a,117,117a) pour le passage des projecteurs de produit de revêtement, caractérisée en ce que ledit équipage mobile (53,53a,153,153a,243, 243a,353,353a), monté sur la face externe d'une desdites parois, est agencé pour déplacer ladite barre (50,50a,150,150a) de telle sorte qu'elle porte en permanence sur les deux bords longitudinaux desdites fentes.

**6°-** Cabine selon la revendication 1, caractérisée en ce que ledit équipage mobile (143,243,243a), monté sur la face externe dudit plafond (115,215) et d'au moins une desdites parois (123,123a,217,217a), est agencé pour déplacer alternativement ladite barre (140,240,240a) contre la face interne dudit plafond en direction de ladite paroi et verticalement contre la face interne de ladite paroi.

**7°-** Cabine selon la revendication 1 caractérisée en ce qu'un équipage mobile ou une combinaison d'équipages mobiles (353,353a) installés sur la face externe d'une ou plusieurs premières parois (317,317a) est susceptible d'entraîner au moins une barre de raclage (350,350a) de ladite première paroi et au moins une barre de raclage (360,360a) d'une autre paroi (323,323a) sensiblement perpendiculaire à ladite première paroi.

**8°-** Cabine selon la revendication 1 caractérisée en ce qu'au moins une barre de raclage (40,40a,240,240a) installée sur la face interne du plafond ou d'une paroi peut être utilisée pendant les phases de projection de produit de revêtement.

**9°-** Procédé de nettoyage d'une cabine de revêtement d'objets par projection de matériau pulvérulent, du type dans laquelle les objets sont assujettis à traverser un espace de projection défini par un plafond (15), des parois (17,17a) et un plancher (24,124,224,324) caractérisé en ce que ledit plafond ou lesdites parois sont nettoyés par raclage, en ce que ledit plancher est nettoyé par raclage et en ce que le nettoyage dudit plafond ou celui desdites parois a lieu avant celui dudit plancher.

**10°-** Procédé de nettoyage d'une cabine de revêtement d'objets par projection de matériau pulvérulent, du type dans laquelle les objets sont assujettis à traverser un espace de projection défini par un plafond (115), des parois (117,117a) et un plancher (124) caractérisé en ce qu'il consiste à installer de façon amovible dans ladite cabine une barre de raclage (140) unique déplaçable alternativement sur la surface interne dudit plafond en coopérant avec un premier équipage mobile (143,143a) puis à installer ladite barre contre la surface interne d'une desdites parois et/ou dudit plancher en coopérant avec au moins un second équipage mobile (153,153a,163).
